# EUROPÄISCHE PATENTSCHRIFT

(11) **EP 2 494 227 B1**
(45) Veröffentlichungstag und Bekanntmachung des Hinweises auf die Patenterteilung: **23.12.2015**
(21) Anmeldenummer: 10786987.7
(22) Anmeldetag: 14.10.2010
(51) Int. Cl.: F16D 23/14, F16D 21/00

(54) **BETÄTIGUNGSVORRICHTUNG ZUR BETÄTIGUNG VON KUPPLUNGSEINRICHTUNGEN**
ACTUATING DEVICE FOR ACTUATING CLUTCH DEVICES
DISPOSITIF D'ACTIONNEMENT DE DISPOSITIFS D'EMBRAYAGE

(30) Priorität: 29.10.2009 DE 102009051247
(43) Veröffentlichungstag der Anmeldung: 05.09.2012
(73) Patentinhaber: Schaeffler Technologies AG & Co. KG, 91074 Herzogenaurach (DE)
(72) Erfinder: HONSELMANN, Sebastian, 77830 Bühlertal (DE); BENNDORF, Jens, 77815 Bühl (DE)
(86) Internationale Anmeldenummer: PCT/DE2010/001215
(87) Internationale Veröffentlichungsnummer: WO 2011/050771

(56) Entgegenhaltungen:
- EP-A1- 0 474 546
- EP-A1- 0 913 597
- DE-A1- 19 712 611
- DE-U1- 9 207 078
- US-A- 4 561 788

## Beschreibung

Die vorliegende Erfindung betrifft eine Betätigungsvorrichtung zur Betätigung von Kupplungseinrichtungen gemäß dem Oberbegriff des Patentanspruchs 1.

Insbesondere betrifft die vorliegende Erfindung eine Betätigungsvorrichtung zur Betätigung von Kupplungseinrichtungen, umfassend zumindest einen von einer, insbesondere elektromechanisch betätigbaren Aktoreinheit auf einer Führungshülse axial verlagerbaren, ein Hebelsystem einer Kupplungseinrichtung beaufschlagenden Lagerträger mit einem Beaufschlagungsbereich für die Aktoreinheit und einem Lagerbereich für ein auf ein Hebelsystem der Kupplungseinrichtung wirkendes Ein-/Ausrücklager. Die Erfindung betrifft im Besonderen eine Betätigungsvorrichtung zur Betätigung einer Doppelkupplung mit zwei mittels eines Hebelsystems axial betätigbaren Kupplungseinrichtungen für ein Doppelkupplungsgetriebe.

Betätigungsvorrichtung zur Betätigung von Kupplungseinrichtungen, insbesondere Doppelkupplungen sind einer Vielzahl von Ausführungen aus dem Stand der Technik vorbekannt. Diese sind durch radial ineinander geschachtelte und um die Getriebeeingangswellen eines nachgeordneten Doppelkupplungsgetriebes angeordnete Betätigungskolben bildende Lagerträger charakterisiert, die auf unterschiedlichen Durchmessern jeweils auf ein Hebelsystem einer Kupplungseinrichtung einwirken und diese je nach ihrer Bauart als zwangsweise geöffnete oder geschlossene Kupplungen durch axiale Verlagerung des Hebelsystems schließen oder öffnen. Die Lagerträger werden über Hebel in axialer Richtung mechanisch verlagert. Dabei werden Ausführungen mit Anordnung und Führung der einzelnen, einer Kupplungseinrichtung zugeordneten Lagerträger auf einer gemeinsamen Führungshülse und Ausführungen unter Vermeidung dieser unterschieden.

Eine Ausbildung einer Betätigungsvorrichtung für Kupplungseinrichtungen, insbesondere eine Doppelkupplungseinrichtungen ist aus der Druckschrift DE 10 2008 047 170 A1 vorbekannt. Bei dieser wird der ein Hebelsystem einer Kupplungseinrichtung beaufschlagende Lagerträger mittels eines, eine Schwenkbewegung ausübenden Hebelaktors in axialer Richtung ausgelenkt. Der einzelne Lagerträger ist mit geringem Spiel auf der Führungshülse in axialer Richtung verlagerbar geführt. Der Hebelaktor wirkt auf einen Beaufschlagungsbereich am Lagerträger, über welchen die Kraft auf das Ein-/Ausrücklager und das durch diese beaufschlagbare Hebelsystem der Kupplungseinrichtung übertragen wird. Die Schwenkbewegung des Hebelaktors bewirkt im Beaufschlagungsbereich am Lagerträger nur einen Linienkontakt zwischen Lagerträger und Hebelaktor. Der Linienkontakt resultiert in einer hohen Flächenpressung. Diese wiederum bedingt im Zusammenhang mit einem hohen Verschleißweg und der engen Führung des Lagerträgers auf der Führungshülse einen unzulässig hohen Verschleiß am Lagerträger.

Der Verschleißweg ist durch zwei systembedingte Größen charakterisiert, zum einen die hohe Betätigungsanzahl des Ein-/Ausrücksystems über die Lebensdauer und zum anderen durch die Überlagerung der Relativbewegung in radialer Richtung zwischen Lagerträger und Hebelaktor sowie der schwingungsbedingten Relativbewegung zwischen Ein-/Ausrücksystem und Hebelaktor. Der daraus resultierende Verschleiß kann zu unzulässig hohen Verschleißraten führen, die die Betriebsweise gefährden können. Ferner können durch den verschleißbedingten Formschluss weitere Nebeneffekten auftreten, welche in weiteren Schädigungen des Systems resultieren.

Eine Betätigungsvorrichtung zur Betätigung von Kupplungseinrichtungen gemäß dem Oberbegriff des Patentanspruchs 1 ist aus der EP 0 474 546 A1 bekannt.

Der Erfindung liegt die Aufgabe zugrunde, eine Betätigungsvorrichtung der eingangs genannten Art derart weiterzuentwickeln, dass die Beanspruchungen der einzelnen, an der Kraftübertragung beteiligten Komponenten sowie der Verschleiß im System bei Betätigung der einzelnen Kupplungseinrichtungen möglichst gering gehalten werden, keine zusätzlichen, schädigende Wirkungen auslösende Kräfte in das System eingebracht werden und an der Kupplungseinrichtung immer das erforderliche zu übertragende Moment gewährleistet werden kann.

Die erfindungsgemäße Lösung ist durch die Merkmale des Anspruchs 1 charakterisiert. Vorteilhafte Ausgestaltungen sind in den Unteransprüchen beschrieben.

Eine erfindungsgemäß ausgeführte Betätigungsvorrichtung zur Betätigung von Kupplungseinrichtungen, umfassend zumindest einen von einer Aktoreinheit auf einer Führungshülse axial verlagerbaren, ein Hebelsystem einer Kupplung beaufschlagenden Lagerträger mit einem Beaufschlagungsbereich für die Aktoreinheit und einem Lagerbereich für ein auf ein Hebelsystem der Kupplungseinrichtung wirkendes Ein-/Ausrücklager, ist dadurch gekennzeichnet, dass der Lagerbereich und der Beaufschlagungsbereich in radialer Richtung voneinander entkoppelt sind und der Kontaktbereich zwischen dem Beaufschlagungsbereich am Lagerträger und einem diesen beaufschlagenden Bereich an einem Hebelaktor der Aktoreinheit derart ausgebildet und angeordnet ist, dass dieser in allen Funktionszuständen als flächiger Kontaktbereich ausgebildet ist.

Unter Entkoppelung in radialer Richtung wird dabei das Fehlen einer Verbindung zur Übertragung von Bewegungen in radialer Richtung verstanden.

Die erfindungsgemäße Lösung bietet den Vorteil der Minimierung von Verschleiß zwischen den im Kontaktbereich zusammenwirkenden Flächenbereichen am Hebelaktor und dem Lagerträger durch Verringerung der Pressung innerhalb des Kontaktbereiches und teilweiser Verringerung der auftretenden Microbewegungen zwischen den beiden zusammenwirkenden Bauteilen im Kontaktbereich. Des Weiteren gewährleistet die radiale Entkoppelung des Lagerbereiches für die Lageranordnung vom eigentlichen Beaufschlagungsbereich für den Hebelaktor am Lagerträger eine Relativbewegung zwischen Lagerbereich und Beaufschlagungsbereich in radialer Richtung und damit eine Verlagerung der im Stand der Technik auftretenden Relativbewegung zwischen Hebelaktor und Lagerträger aus dem Kontaktbereich in den Lagerträger hinein, wodurch der Gesamtverschleißweg über die Lebensdauer erheblich verringert werden kann. Durch die zwei- oder mehrteilige Ausführung des Lagerträgers können die von unterschiedlichen Einzelbauteilen gebildeten einzelnen Bereiche optimal an die auszuführende Funktion, insbesondere hinsichtlich Materialwahl und/oder Geometrie und/oder Dimensionierung angepasst werden.

Zur radialen Entkopplung des Beaufschlagungsbereiches vom Lagerbereich für das Ein-/ Ausrücklager ist der Lagerträger zumindest zweiteilig ausgebildet, umfassend ein den Beaufschlagungsbereich bildendes Trägerteil und eine in diesem schwimmend gelagerte, den Lagerbereich bildende Führungsscheibe, welche axial verschiebbar auf der Führungshülse geführt ist. Durch die radiale Entkoppelung kann die aufgrund der Schwenkbewegung des Hebelaktors ansonsten in der Verbindung zwischen diesem und dem Lagerträger kompensierte Relativbewegung nunmehr aus dem Krafteinleitungsbereich heraus und in den Lagerträger außerhalb des Krafteinleitungsbereiches hinein verlagert werden. Durch die zweiteilige Ausführung besteht die Möglichkeit, die Materialwahl auf die dabei erzeugte Reibpaarung auszulegen und hinsichtlich der Reibbeiwerte zu optimieren.

In vorteilhafter Weise wird der Kontaktbereich zwischen dem, den Lagerträger im Beaufschlagungsbereich beaufschlagenden Hebelaktor der Aktoreinheit und dem Beaufschlagungsbereich am Lagerträger von einer formschlüssigen Verbindung gebildet. Diese dient neben einer Verringerung der im Beaufschlagungsbereich wirkenden Pressung einer vorzugsweise spielfreien Kopplung der Bewegung des Hebelaktors mit dem Beaufschlagungsbereich am Lagerträger. Aufgrund der Verhinderung der Relativbewegung zwischen Beaufschlagungsbereich und Hebelaktor kann der Verschleiß im Krafteinleitungsbereich am Lagerträger weitestgehend vermieden werden und die lokalen Belastungen der Bauteile gering gehalten werden.

Bezüglich der konkreten Ausführung der den Kontaktbereich zwischen Hebelaktor und Lagerträger bildenden Flächenbereiche bestehen eine Vielzahl von Möglichkeiten.

Zur gleichmäßigen Beaufschlagung und Vermeidung von Relativbewegungen in weiteren Richtungen ist der Kontaktbereich entweder durchgängig und/oder aus einer Mehrzahl von Teilflächen gebildet, die vorzugsweise jeweils bezüglich einer Senkrechten zur Mittellinie der den Lagerträger führenden Führungshülse und damit einer Symmetrieachse des Lagerträgers symmetrisch angeordnet sind. Die Symmetrie erlaubt eine gleichmäßige Krafteinleitung in definierten Kraftrichtungen und damit sichere Betriebsweise.

In einer besonders vorteilhaften Ausführung weisen die Flächenbereiche an einem der im Kontaktbereich zusammenwirkenden Bauteile zumindest einen, durch wenigstens einen Krümmungsradius beschreibbaren konvexen oder konkaven Flächenbereich auf, der mit einem dazu komplementären, durch wenigstens einen Krümmungsradius beschreibbaren konkaven oder konvexen Flächenbereich am jeweils anderen Bauteil zusammenwirkt. In besonders vorteilhafter Ausführung wird der Beaufschlagungsbereich am Lagerträger von einer oder mehreren Kugelkalotten beschrieben und der beaufschlagende Bereich am Hebelaktor von einer dazu komplementär ausgeformten Fläche gebildet. Diese Möglichkeit bietet den Vorteil, den Formschluss durch Modifizierung an den einzelnen Bauteilen - Lagerträger und Hebelaktor - ohne Schwächung dieser im Kontaktbereich zu erzeugen.

Im Einzelnen sind eine Vielzahl von Möglichkeiten zur Realisierung des Formschlusses zwischen Lagerträger und Hebelaktor möglich, wobei diese die Ausbildung eines flächigen Kontaktbereiches gewährleisten. Die konkrete Ausführung, Anzahl, Dimensionierung der einzelnen, die den Kontaktbereich bildenden Flächenbereiche am Lagerträger und dem Hebelaktor beschreibenden Bereiche wird als Funktion der zu übertragenden Kräfte, des zur Verfügung stehenden Bauraumes für den Angriff und die Auslenkung des Hebelaktors gegen den Beaufschlagungsbereich, des Materials, der Dimensionierung und Geometrie der einzelnen zusammenwirkenden Komponenten festgelegt. Ferner erfolgt die Anordnung und bei einseitigem Formschluss Sperrrichtung des Formschlusses in Abhängigkeit der erforderlichen Bewegungsrichtungen zur Beaufschlagung der Kupplungseinrichtung und damit der Ausbildung der Aktoreinheit.

In einer vorteilhaften Weiterentwicklung ist das Trägerteil als hülsen- oder ringförmiges Element ausgeführt, welches die Führungsscheibe unter Ausbildung eines zwischen dem Außenumfang der Führungsscheibe und dem Innenumfang des Trägerteiles vorhandenen Radialspiels in Umfangsrichtung umschließt und eine axiale Fläche zum Zusammenwirken mit einer axialen Anschlagfläche der Führungsscheibe zur Ausbildung einer Reibpaarung bei Relativbewegung in radialer Richtung aufweist.

Zur Verminderung der Reibung zwischen Trägerteil und Führungsscheibe können zumindest die eine Reibpaarung bildenden Flächenbereiche beschichtet ausgebildet sein, beispielsweise durch Aufbringen Teflon-haltiger Gleitschichten, diamantähnlichem Kohlenstoff oder andere Materialien mit geringen Reibbeiwerten.

Ferner besteht die Möglichkeit, dem Reibpaarungsbereich Mittel zur Applikation von den Reibbeiwert herabsetzenden Medien, wie Schmiermittel zuzuordnen.

Gemäß einer weiteren Ausführung werden Trägerteil und Führungsscheibe aus unterschiedlichen, an die auszuführenden Funktionen angepassten Materialien gefertigt.

In einer weiteren vorteilhaften Ausführung ist der Lagerbereich durch ein Radialspiel zwischen Ein-/Ausrücklager und Führungsscheibe charakterisiert.

Die erfindungsgemäße Lösung wird nachfolgend anhand von Figuren erläutert. Darin ist dargestellt:
- Figur 1: verdeutlicht in einem Ausschnitt aus einem Axialschnitt ein erfindungsgemäß ausgeführtes Betätigungssystem für Kupplungen, insbesondere Doppelkupplungen;
- Figuren 2a und 2b: zeigen einen Trägerteil eines Lagerträgers in zwei Ansichten;
- Figur 2c: verdeutlicht ein Trägerteil in Einbaulage gegenüber der Führungshülse;
- Figur 3: verdeutlicht beispielhaft einen Hebelaktor;
- Figur 4: zeigt einen erfindungsgemäßen Lagerträger im Axialschnitt.

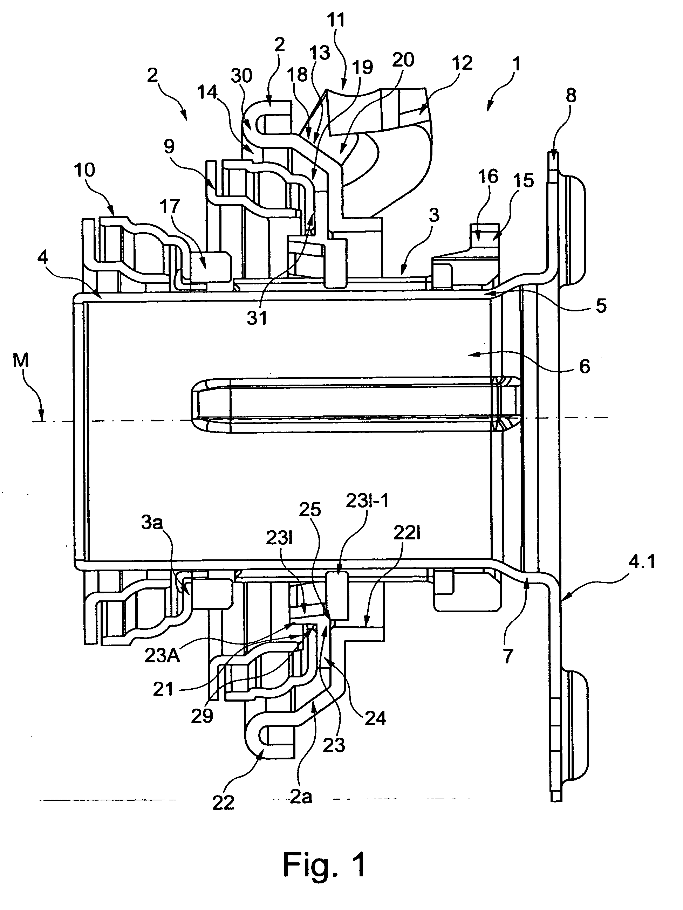

Figur 1 verdeutlicht in schematisiert stark vereinfachter Darstellung in einem Ausschnitt aus einem Axialschnitt eine erfindungsgemäß ausgeführte Betätigungsvorrichtung 1 zur Betätigung einer hier im Einzelnen nicht dargestellten Kupplungseinrichtung, insbesondere in einer Doppelkupplung. Dieses umfasst jeweils einer Kupplungseinrichtung zugeordnete Lagerträger 2, 3, die auf einer Führungshülse 4 in axialer Richtung verlagerbar geführt sind und wie ein Kolbenelement auf entsprechende als Ein-/Ausrücklager 9, 10 für Hebelsysteme der einzelnen Kupplungseinrichtungen fungierende Lageranordnungen einwirken. Die Führungshülse 4 weist einen bezüglich einer Mittenachse M rohrförmig ausgebildeten Abschnitt 5 mit einer Durchführung 6 für die Eingangswellen eines Doppelkupplungsgetriebes in Form von ineinander geschachtelten Wellen und Hohlwellen auf. Dabei ist die Führungshülse 4 am von den über die einzelnen Lagerträger 2, 3 zu betätigenden Kupplungseinrichtungen abgewandten Endbereich 7, insbesondere der Stirnseite 4.1 radial unter Bildung eines Flansches 8 erweitert, wobei der Flansch 8 an einer hier nicht dargestellten Gehäusewand eines Getriebes und zu den durch die Führungshülse 4 geführten Getriebeeingangswellen zentral befestigt ist.

Die beiden als Kolbenelemente fungierenden Lagerträger 2 und 3 tragen an ihren vom Flansch 8 in Einbaulage abgewandten Stirnseiten 2a und 3a jeweils eine einzelne Lageranordnung, welche vorzugsweise als Wälzlager ausgebildet ist und bei zugedrückten Kupplungsvorrichtungen 1 als Einrücklager, bei aufgedrückten Kupplungsvorrichtungen als Ausrücklager fungiert. Diese werden daher nachfolgend kurz als Ein-/Ausrücklager 9, 10 bezeichnet. Die einzelnen Ein-/Ausrücklager 9, 10 ermöglichen eine verdrehbare Beaufschlagung der sich an diese anschließenden Hebelsysteme, beispielsweise von Betätigungshebeln in Form von an den einzelnen Kupplungseinrichtungen wirksamen Tellerfedern etc. Zur Anpassung des Wirkdurchmessers des jeweiligen einzelnen Ein-/Ausrücklagers 9, 10 an die Durchmesser der Betätigungs- beziehungsweise Hebelsysteme der Kupplungseinrichtungen, kann an einem oder an beiden Ein-/Ausrücklagern 9, 10 ein Druckring vorgesehen sein. Die Beaufschlagung der einzelnen Ein-/Ausrücklager 9, 19 erfolgt über eine Aktoreinheit, hier beispielsweise für den Lagerträger 2 die Aktoreinheit 11, deren Hebelaktor, hier für die Aktoreinheit 11 der Hebelaktor 12 auf den jeweiligen Lagerträger 2, 3 durch zumindest mittelbaren Kontakt mit diesem einwirkt.

Die den einzelnen Lagerträgern 2, 3 zugeordneten Aktoreinheiten, hier beispielhaft nachfolgend für die Aktoreinheit 11 erläutert, können hinsichtlich der einzelnen, die Bewegung des Hebelaktors 12 auslösenden Stellglieder verschiedenartig ausgeführt sein. Der Hebelaktor 12 der Aktoreinheit 11 ist derart angeordnet und ausgebildet, dass dieser bei Betätigung eine Verschwenkbewegung ausführt, die aus einer Bewegung in radialer als auch axialer Richtung zusammengesetzt ist. Die Kraftübertragung über den Hebelaktor 12 erfolgt am Lagerträger 2 in einem Beaufschlagungsbereich 13. Ferner ist am Lagerträger 2 ein weiterer Beaufschlagungsbereich 14 zur Beaufschlagung des Hebelsystems, welches direkt an der Kupplungseinrichtung wirkt, vorgesehen.

Der Lagerträger 3 besteht ebenfalls aus einem separaten, einen Beaufschlagungsbereich 15 für eine hier nicht dargestellte Aktoreinheit bildenden Bauteil 16 und einem weiteren, einen Beaufschlagungsbereich für das Hebelsystem der Kupplungseinrichtung bildenden Bauteil 17.

Die einzelnen Aktoreinheiten zur Betätigung der Ein-/Ausrücklager 9, 10, welche den einzelnen Lagerträgern 2, 3 zugeordnet sind, sind hier nicht dargestellt. Diese können beispielhaft elektrisch, hydraulisch, elektrohydraulisch oder pneumatisch eine Kraft auf einen Hebelaktor, hier für die Aktoreinheit 11 den Hebelaktor 12 oder ein anderweitig ausgestaltetes Kraftübertragungselement ausüben, welches sich gehäusefest, beispielsweise am Getriebegehäuse oder an der Kupplungsglocke abstützt und eine Hebelkraft auf die Beaufschlagungsbereiche 13 beziehungsweise 15 überträgt. Dadurch werden die einzelnen Lagerträger 2, 3 jeweils in axialer Richtung entlang des rohrförmigen Abschnittes 5 der Führungshülse 4 verlagert und die Kraft über das jeweilige einzelne Ein-/Ausrücklager 9, 10 auf die nicht dargestellten Hebelsysteme der diesen zugeordneten Kupplungseinrichtungen übertragen werden, wodurch diese betätigt werden.

Über den, den Kontakt des beaufschlagenden Bereiches 18 des Hebelaktors 12 mit dem Beaufschlagungsbereich 13 des Lagerträgers 2 definierenden Kontaktbereich 19 wird die Schwenkbewegung des Hebelaktors 12 in eine Linearbewegung umgesetzt. Die Schwenkbewegung bewirkt, dass die Kraft am Hebelaktor 12 über einen Radius auf den Beaufschlagungsbereich 13 geleitet wird. Dies führt bei einer ebenen Ausführung des Beaufschlagungsbereiches 13 gemäß dem Stand der Technik nur zu einem linienförmigen Kontakt im Kontaktbereich 19 zwischen Hebelaktor 12 und Beaufschlagungsbereich 13. Aufgrund der axialen Führung mit jedoch geringem Radialspiel bedingt der Linienkontakt eine hohe Pressung in Verbindung mit einem gleichzeitig hohen Verschleißweg und damit unzulässig hohem Verschleiß am Lagerträger 2. Erfindungsgemäß wird daher die Kontaktgeometrie zwischen dem Lagerträger 2 und dem Hebelaktor 12 derart geändert, dass immer, das heißt auch während der Beaufschlagung ein Flächenkontakt zwischen Lagerträger 2 und Hebelaktor 13 im Kontaktbereich 19 zwischen diesen gegeben ist, wodurch der Kontaktbereich 19 zwischen Hebelaktor 12 und Beaufschlagungsbereich 13 nunmehr einen flächigen Bereich und damit Flächenpressung beschreibt. Dadurch wird eine formschlüssige Verbindung 20, vorzugsweise frei von einem Spiel oder aber zumindest anstatt einer Gleitbewegung zwischen Lagerträger 2 und Hebelaktor 12 eine Abwälzbewegung erzielt.

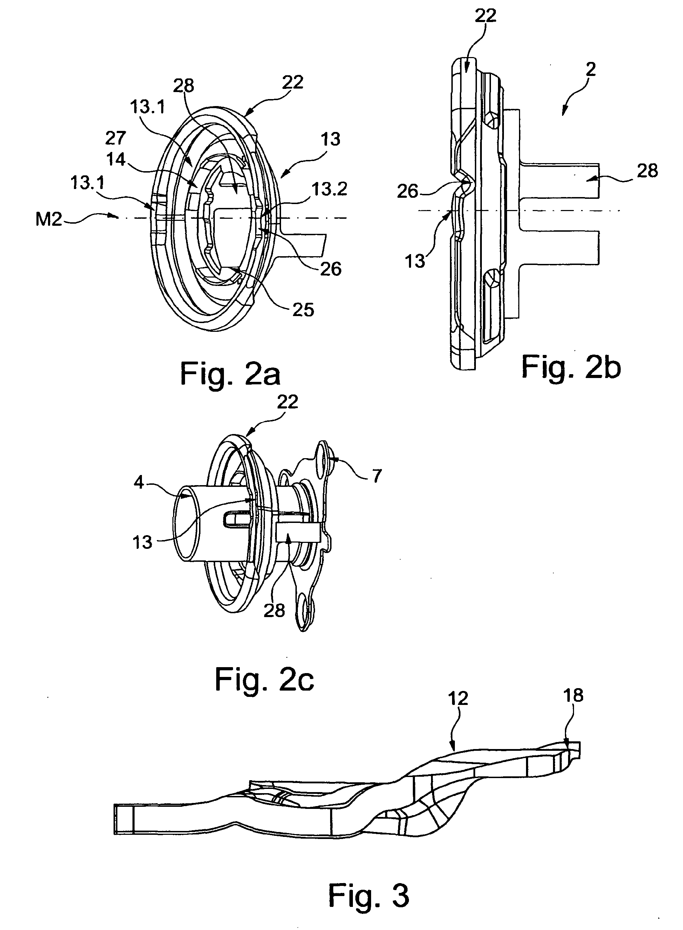

In einer besonders vorteilhaften Ausführung werden die den Beaufschlagungsbereich 13 bildenden Flächenbereiche von einer in der Figur 1 im Einzelnen nicht dargestellten Kalotte gebildet. Grundsätzlich bestehen zur Umsetzung der Realisierung einer formschlüssigen Verbindung 20 zwischen Lagerträger 2 und Hebelaktor 12 eine Vielzahl von Möglichkeiten, wobei bezüglich einer vorteilhaften Ausführung im Einzelnen auf die Figuren 2a, 2b und 3 verwiesen wird.

Aufgrund der formschlüssigen Verbindung 20 ist eine Relativbewegung zwischen Hebelaktor 12 und Beaufschlagungsbereich 13 bei Einwirkung des Hebelaktors 12 auf den Beaufschlagungsbereich 13 in radialer Richtung nicht mehr gegeben. Um Schädigungen und eine zu hohe Lagerbelastung zu vermeiden geht erfindungsgemäß mit der Ausbildung des Formschlusses ferner eine radiale Entkoppelung zwischen Beaufschlagungsbereich 13 und Lagerbereich 21 für das Ein-/Ausrücklager 9 einher. Im einfachsten Fall erfolgt diese Entkoppelung durch eine zumindest zweiteilige Ausführung, bei welcher die Funktionsbereiche unterschiedlichen Bauteilen zugeordnet sind. Der Lagerträger 2 umfasst einen ringförmigen Trägerteil 22 für den Beaufschlagungsbereich 13 und eine innerhalb des von diesem in Umfangsrichtung umschlossenen Innenraumes angeordnete Führungsscheibe 23, deren Außenumfang 23A mit radialem Spiel zum Innenumfang 22I des Trägerteils 22 angeordnet ist. Die Führungsscheibe 23 ist schwimmend im Trägerteil 22 gelagert. Die Führungsscheibe 23 übernimmt ferner die Führung des Lagerträgers 2 an der Führungshülse 4, wobei dazu ein Innenumfang 231-1 bildender Teilbereich zur form- oder kraftschlüssigen Verbindung mit axialer Verschiebbarkeit mit der Führungshülse 4 vorgesehen ist. Am Außenumfang 23A ist ferner der Lagerbereich 21 zur Abstützung/Aufnahme des Ein-/Ausrücklagers 9 vorgesehen. Die Führungsscheibe 23 weist einen in axialer Richtung ausgerichteten Flächenbereich auf, der eine in axialer Richtung weisende Anschlagfläche 24 zur Anlage an einer axialen Fläche 25 am Trägerteil 22 dient. Die Anschlagfläche 24 ist dabei zur Wirkrichtung des Hebelaktors 12 entgegengesetzt ausgerichtet. Ferner weist die Führungsscheibe eine axiale Fläche 31 innerhalb des Lagerbereiches 21 zur Abstützung des Ein-/Ausrücklagers 9 in axialer Richtung auf.

Eine Auslenkung am Trägerteil 22 in radialer Richtung bei Schwenkbewegung des Hebelaktors 12 führt durch die erfindungsgemäße Kombination der Ausbildung der einen Formschluß bewirkenden Kontaktgeometrie und der zweigeteilten Ausführung des Lagerträgers 2 nicht mehr zu einer Relativbewegung zwischen Beaufschlagungsbereich 13 und Hebelaktor 12. Die Relativbewegung wird somit von der eigentlichen Krafteinleitung weg in den Lagerträger 2 hinein verlagert.

In besonders vorteilhafter Ausführung ist zwischen Führungsscheibe 23 und Ein-/Ausrücklager 9 ein radialer Ringspalt 29 ausgebildet, welcher der Realisierung einer Selbstzentrierungsfunktion dessen dient.

Die Vergrößerung des Kontaktbereiches 19 erfolgt gemäß einer besonders vorteilhaften und in den Figuren 2a und 2b dargestellten Ausführung durch die gekrümmte Ausbildung der Flächenbereiche des Beaufschlagungsbereiches 13 am Lagerträger 2 und die komplementäre Ausführung am beaufschlagenden Bereich 18 gemäß Figur 3 am Hebelaktor 12.

Der einzelne Beaufschlagungsbereich 13 am Lagerträger 2 und der beaufschlagende Bereich 18 am Hebelaktor 12 kann in Abhängigkeit der Ausführung des Lagerträgers 2 aus jeweils nur einem durchgängigen Flächenbereich oder aber zumindest zwei voneinander getrennt an diesen angeordneten Flächenbereichen gebildet werden. Dabei wird jedoch zur gerichteten Krafteinleitung vorzugsweise immer eine bezüglich einer Senkrechten zur Mittenachse M der Führungshülse 4 am Lagerträger 2 und/oder der Mittenachse M2 des Lagerträgers 2, insbesondere des Trägerteils 22 symmetrische Anordnung und Ausführung der Flächenbereiche 13.1, 13.2 des Beaufschlagungsbereiches 13 angestrebt. Im dargestellten Fall sind beispielhaft die beiden Flächenbereiche 13.1 und 13.2 am Lagerträger 2 symmetrisch zur Mittenachse M2, welche in Einbaulage im unausgelenkten Zustand der Mittenachse M der Führungshülse 4 entspricht, angeordnet.

Die gekrümmte Ausführung der miteinander in Wirkverbindung stehenden Flächenbereiche im Kontaktbereich 19 gemäß Figur 1 zwischen Lagerträger 2 und Hebelaktor 12 kann durch die Ausbildung von Ausnehmungen an einem der beiden an der Ausbildung des Kontaktbereiches 19 beteiligten Elementen und der Ausführung von dazu komplementären und in die Ausnehmungen unter flächiger Anlage eingreifenden Vorsprüngen an der jeweils anderen Komponente gewährleistet werden. Dadurch wird entweder ein vollständiger Formschluss frei von einem Spiel oder aber zumindest anstatt einer Gleitbewegung zwischen Lagerträger und Hebelaktor eine Abwälzbewegung erzielt. In einer besonders vorteilhaften Ausführung werden die den Beaufschlagungsbereich 13 bildenden Flächenbereiche 13.1, 13.2 von zylindrischen Kalotten 26 gebildet. Im Zusammenwirken mit als Negativ zu den durch diese beschriebenen Flächenbereiche 13.1, 13.2 am beaufschlagenden Bereich 18 am Hebelaktor 12 ausgebildeten Flächenbereichen, welche in die Kalottenform eingreifen, vergrößern diese auf der einen Seite den Kontaktbereich 19, verbinden aber die Teile andererseits formschlüssig miteinander.

Die Auslegung, insbesondere Geometrie und Dimensionierung der einzelnen am Kontaktbereich beteiligten Flächenbereiche 13.1, 13.2 des Beaufschlagungsbereiches und des beaufschlagenden Bereiches 18 am Hebelaktor 12 sowie die Ausrichtung und Anordnung dieser an den miteinander in Wirkverbindung bringbaren Elementen erfolgt in Abhängigkeit des zur Verfügung stehenden Bauraumes, insbesondere des Lagerträgers 2 sowie der verwendeten Materialien für die Ausbildung dieser und der zu übertragenden Kräfte.

Die am Kontaktbereich 19 beteiligten Flächenbereiche des Beaufschlagungsbereiches 13 am Lagerträger 2 und des beaufschlagenden Bereiches 18 am Hebelaktor 12, sind derart angeordnet und ausgebildet, dass diese bei Ausführung der Schwenkbewegung des Hebelaktors 12 und Umsetzung dieser in eine translatorische Bewegung zur Betätigung der Kupplungseinrichtung eine Verschiebung des Lagerträgers 2 in axialer Richtung auf der Führungshülse 4 bewirken, wobei das Trägerteil 22 in radialer Richtung gegenüber der Führungsscheibe 23 bewegt wird. Die Kraft wird über die dabei in axialer Richtung verschiebbare Führungsscheibe 23 und das Ein-/Ausrücklager 9 auf die Kupplungseinrichtung übertragen.

Der Trägerteil 22 weist an seinem, vom Flansch 8 weggerichteten Endbereich in Einbaulage, wie in der Figur 2c beispielhaft in der Zusammenschau mit der Führungshülse 4 dargestellt, einen umgeformten, bezogen auf die Mittenachse M2 des Trägerteils 22 ringförmig ausgebildeten, in Umfangsrichtung verlaufenden topfartigen und im Querschnitt im Axialschnitt C-förmigen Randbereich 30 auf. Dazu ist der Endbereich beispielhaft durch Tiefziehen hergestellt. Das Ende des umgeformten Endbereiches und damit die Öffnung des C-Profils weisen in Einbaulage zum Flansch 8. In den durch das C-Profil beschreibbaren Bereich ist eine Kalotte 26 eingearbeitet. Diese beschreibt die für den Formschluss erforderlichen entsprechend gekrümmten einzelnen Flächenbereiche zum Zusammenwirken mit einer entsprechenden Kuppenform am Hebelaktor 12.

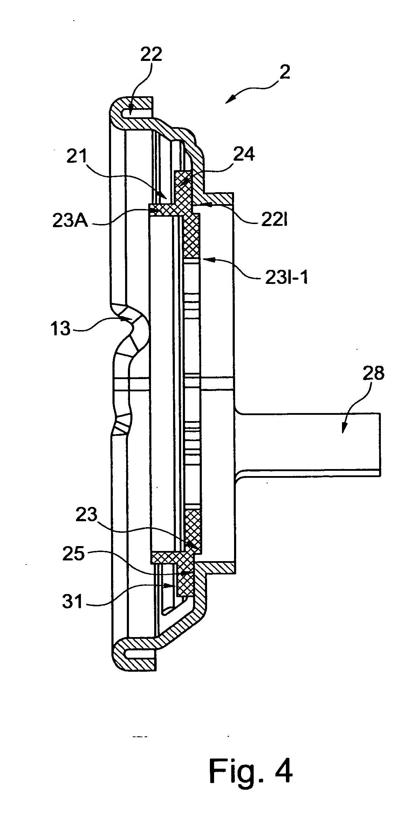

Die zweigeteilte Ausführung des Lagerträgers 2 aus Führungsscheibe 23 und Trägerteil 22 ist in der Funktionsanordnung in Figur 4 in einem Axialschnitt gemäß Figur 1 wiedergegeben. Bezüglich der Ausführung des Beaufschlagungsbereiches 13 und der Führungsscheibe 23 wird auf die vorhergehenden Erläuterungen verwiesen. Erkennbar ist die schwimmende Lagerung der Führungsscheibe 23 im Trägerteil 22 sowie die Ausbildung des Lagerbereiches 21 am Außenumfang 23A der Führungsscheibe 23, das Radialspiel zwischen Führungsscheibe 23 und Innenumfang 22I des Trägerteils 22 sowie der Beaufschlagungsbereich 13, die Anschlagfläche 25 für das Ein-/Ausrücklager. Die Anschlagfläche 25 kann in Umfangsrichtung umlaufend oder aber von einer Vielzahl von in Umfangsrichtung beabstandet zueinander angeordneten Teilflächen gebildet werden.

Ferner dargestellt ist ein ringförmiger Bereich 27, welcher der Beaufschlagung beziehungsweise der Einwirkung auf das Hebelsystem der Kupplungseinrichtung dient und den Beaufschlagungsbereich 14 bildet.

Der Lagerträger weist in axialer Richtung ausgerichtete und bei Ausführung der Betätigungsvorrichtung 1 für Doppelkupplungen die Komponenten des der anderen Kupplungseinrichtung zugeordneten Lagerträgers 3 beziehungsweise der mit diesen verbundenen Elemente in Richtung zum Flansch 8 axial übergreifende Arme 28 auf, die in Umfangsrichtung beabstandet zueinander angeordnet sind und in axialer Richtung einen Anschlag für die Begrenzung der Bewegung des Lagerträgers 2 bilden.

Vorzugsweise ist der Trägerteil 22 als Blechformteil aus einem metallischen Werkstoff, insbesondere 16MnCr5 und die Führungsscheibe 23 aus Kunststoff gefertigt und/oder mit reibungsreduzierenden Zusätzen, insbesondere im Kontaktbereich zwischen Führungsscheibe 23 und Trägerteil 22 compoundiert. Durch die Verlagerung der Relativbewegung von Hebelaktor 12 zum Lagerträger 2 zwischen Führungsscheibe 23 und Trägerteil 22 wird die Relativbewegung in eine Reibpaarung mit geringem Reibbeiwert verlegt

In besonders vorteilhafter Ausführung kann durch die Positionierung des für den Hebelaktor notwendigen Endanschlages am Trägerteil 22 der anstehende Verschleiß an den Kontaktbereichen Ein-/Ausrücklager 9 zur Führungsscheibe 23 sowie Führungsscheibe 23 und Trägerteil 22 nachgestellt werden.

Die erfindungsgemäße Lösung ist nicht auf die in den Figuren 1 bis 4 dargestellten Ausführungen beschränkt. Vielmehr bestehen hinsichtlich der Realisierung formschlüssiger Verbindungen 20 und der damit auszubildenden Bereiche an Hebelaktor 12 und Lagerträger 2 keine Restriktionen. Dabei ist jede formschlüssige Verbindung, die geeignet ist, einen großen Kontaktbereich 19 bereitzustellen in Kombination mit dem schwimmend am Trägerteil 22 des Lagerträgers 2 gelagerten Lagerbereichs 21 geeignet.

### Bezugszeichenliste

- 1: Betätigungsvorrichtung
- 2: Lagerträger
- 2a: Stirnseite
- 3: Lagerträger
- 3a: Stirnseite
- 4: Führungshülse
- 4.1: Stirnseite
- 5: rohrförmiger Abschnitt
- 6: Durchführung
- 7: Endbereich
- 8: Flansch
- 9: Lageranordnung, insbesondere Ein-/Ausrücklager
- 10: Lageranordnung, insbesondere Ein-/Ausrücklager
- 11: Aktoreinheit
- 12: Hebelaktor
- 13: Beaufschlagungsbereich
- 13.1,13.2: Flächenbereiche des Beaufschlagungsbereiches 13
- 14: Beaufschlagungsbereich
- 15: Beaufschlagungsbereich
- 16: Bauteil
- 17: Bauteil
- 18: beaufschlagender Bereich
- 19: Kontaktbereich
- 20: formschlüssige Verbindung
- 21: Lagerbereich
- 22: Trägerteil für Beaufschlagungsbereich
- 22I: Innenumfang Trägerteil
- 23: Führungsscheibe
- 23I: Innenumfang Führungsscheibe
- 23I-1: Innenumfang bildender Teilbereich
- 23A: Außenumfang Führungsscheibe
- 24: Anschlagfläche
- 25: axiale Fläche
- 26: Kalotte
- 27: ringförmiger Bereich
- 28: Arm
- 29: Radialspalt
- 30: Randbereich
- 31: axiale Fläche
- M: Mittenachse Führungshülse
- M2: Mittenachse Lagerträger 2

## Patentansprüche

1. Betätigungsvorrichtung (1) zur Betätigung von Kupplungseinrichtungen, umfassend zumindest einen von einer Aktoreinheit (11) auf einer Führungshülse (4) axial verlagerbaren, ein Hebelsystem einer Kupplungseinrichtung beaufschlagenden Lagerträger (2) mit einem Beaufschlagungsbereich (13) für die Aktoreinheit (11) und einem Lagerbereich (21) für ein auf das Hebelsystem der Kupplungseinrichtung wirkendes Ein-/Ausrücklager (9), wobei der Lagerbereich (21) und der Beaufschlagungsbereich (13) in radialer Richtung voneinander entkoppelt sind und der Kontaktbereich (19) zwischen dem Beaufschlagungsbereich (13) am Lagerträger (2) und einem diesen beaufschlagenden Bereich (18) an einem Hebelaktor (12) der Aktoreinheit (11) derart ausgebildet und angeordnet ist, dass dieser in allen Funktionszuständen als flächiger Kontaktbereich (19) ausgebildet ist, **dadurch gekennzeichnet, dass** der Lagerträger (2) zumindest zweiteilig ausgebildet ist, umfassend ein den Beaufschlagungsbereich (13) bildendes Trägerteil (22) und eine in diesem schwimmend gelagerte, den Lagerbereich (21) bildende Führungsscheibe (23), welche axial verschiebbar auf der Führungshülse (4) geführt ist.

2. Betätigungsvorrichtung (1) nach Anspruch 1, **dadurch gekennzeichnet, dass** der Kontaktbereich (19) zwischen dem, den Lagerträger (2) im Beaufschlagungsbereich (13) beaufschlagenden Hebelaktor (12) der Aktoreinheit (11) und dem Beaufschlagungsbereich (13) am Lagerträger (2) durch zumindest eine formschlüssige Verbindung (20) zwischen Lagerträger (2) und Hebelaktor (12) gebildet wird.

3. Betätigungsvorrichtung (1) nach Anspruch 1 oder 2, **dadurch gekennzeichnet, dass** der Beaufschlagungsbereich (13) am Lagerträger (2) zumindest einen, durch wenigstens einen Krümmungsradius beschreibbaren konvexen und/oder konkaven Flächenbereich (13.1, 13.2) umfasst, der mit einem dazu komplementären, durch wenigstens einen Krümmungsradius beschreibbaren konkaven und/oder konvexen Flächenbereich des den Lagerträger (2) beaufschlagenden Bereiches (18) am Hebelaktor (12) unter Ausbildung des Kontaktbereiches (19) zusammenwirkt.

4. Betätigungsvorrichtung (1) nach Anspruch 2 oder 3, **dadurch gekennzeichnet, dass** der Beaufschlagungsbereich (13) am Lagerträger (2) durch zumindest eine Kalotte (26) beschreibbar ist und der den Lagerträger (2) beaufschlagende Bereich (18) am Hebelaktor (12) von einer dazu komplementär geformten Kuppe im Endbereich des Hebelaktors (12) gebildet wird.

5. Betätigungsvorrichtung (1) nach einem der Ansprüche 1 bis 4, **dadurch gekennzeichnet, dass** das Trägerteil (22) als hülsen- oder ringförmiges Element ausgeführt ist, welches die Führungsscheibe (23) unter Ausbildung eines zwischen dem Außenumfang (23A) der Führungsscheibe (23) und dem Innenumfang (22I) des Trägerteiles (22) vorhandenen Radialspiels in Umfangsrichtung umschließt und eine axiale Fläche (25) zum Zusammenwirken mit einer axialen Anschlagfläche (24) der Führungsscheibe (23) aufweist.

6. Betätigungsvorrichtung (1) nach einem der Ansprüche 1 bis 5, **dadurch gekennzeichnet, dass** zwischen der Führungsscheibe (23) und dem Ein-/Ausrücklager (9) ein radialer Ringspalt (30) vorgesehen ist.

7. Betätigungsvorrichtung (1) nach einem der Ansprüche 1 bis 6, **dadurch gekennzeichnet, dass** zumindest die an der Ausbildung einer Reibpaarung beteiligten Flächenbereiche am Trägerteil (22) und der Führungsscheibe (23) hinsichtlich der Materialwahl optimiert sind, insbesondere Trägerteil (22) und Führungsscheibe (23) aus unterschiedlichen Materialien ausgebildet sind.

## Claims

1. Actuating device (1) for actuating clutch devices, comprising at least one bearing carrier (2), which can be displaced axially on a guide sleeve (4) by an actuator unit (11), which applies pressure to a lever system of a clutch device and has a pressure-application region (13) for the actuator unit (11) and a bearing region (21) for an engagement/disengagement bearing (9) which acts on the lever system of the clutch device, wherein the bearing region (21) and the pressure-application region (13) are decoupled from one another in the radial direction, and the contact region (19) is formed and arranged between the pressure-application region (13) on the bearing carrier (2) and a region (18), applying pressure thereto, on a lever actuator (12) of the actuator unit (11), in such a way that said contact region (19) is embodied in all functional states as a planar contact region (19), **characterized in that** the bearing carrier (2) is embodied at least in two parts, comprising a bearing part (22) which forms the pressure-application region (13) and a guide disc (23), which is mounted in a floating fashion thereon, forms the bearing region (21) and is guided in an axially displaceable fashion on the guide sleeve (4).

2. Actuating device (1) according to Claim 1, **characterized in that** the contact region (19) is formed between the lever actuator (12), which applies pressure to the bearing carrier (2) in the pressure-application region (13), of the actuator unit (11) and the pressure-application region (13) on the bearing carrier (2) by means of at least one positively locking connection (20) between the bearing carrier (2) and the lever actuator (12).

3. Actuating device (1) according to Claim 1 or 2, **characterized in that** the pressure-application region (13) on the bearing carrier (2) comprises at least one convex and/or one concave planar region (13.1, 13.2) which can be described by at least one curvature radius and interacts with a concave and/or a convex planer region, complementary thereto and which can be described by at least one curvature radius, of the region (18) on the lever actuator (12) which applies pressure to the bearing carrier (2), forming the contact region (19).

4. Actuating device (1) according to Claim 2 or 3, **characterized in that** the pressure-application region (13) on the bearing carrier (2) can be described by means of at least one spherical cap (26), and the region (18), which applies pressure to the bearing carrier (2), on the lever actuator (12) is formed by a cap, shaped in a complementary fashion with respect thereto, in the end region of the lever actuator (12).

5. Actuating device (1) according to one of Claims 1 to 4, **characterized in that** the carrier part (22) is embodied as a sleeve-shaped or annular element which encloses the guide disc (23) while forming radial play in circumferential direction, which is present between the outer circumference (23A) of
the guide disc (23) and the inner circumference (22I) of the carrier part (22), and has an axial face (25) for interacting with an axial stop face (24) of the guide disc (23).

6. Actuating device (1) according to one of Claims 1 to 5, **characterized in that** a radial annular gap (30) is provided between the guide disc (23) and the engagement/disengagement bearing (9).

7. Actuating device (1) according to one of Claims 1 to 6, **characterized in that** at least the planar regions, involved in the formation of a frictional pairing, on the carrier part (22) and the guide disc (23) are optimized with respect to the selection of materials, and in particular the carrier part (22) and guide disc (23) are embodied from different materials.

## Revendications

1. Dispositif d'actionnement (1) pour actionner des dispositifs d'embrayage, comprenant au moins un support de palier (2) pouvant être déplacé dans le plan axial sur une douille de guidage (4) à partir d'une unité d'actionneur (11) et chargeant un système de levier d'un dispositif de couplage avec une zone de charge (13) pour l'unité d'actionneur (11) et une zone de palier (21) pour un palier de couplage/découplage (9) agissant sur le système de levier du dispositif de couplage, la zone de palier (21) et la zone de charge (13) étant découplées l'une de l'autre dans la direction radiale et la zone de contact (19) étant réalisée et disposée entre la zone de charge (13) située au niveau du support de palier (2) et une zone (18) la chargeant située au niveau d'un actionneur à levier (12) de l'unité d'actionneur (11) de telle sorte que ledit actionneur prend la forme, dans tous les états de fonctionnement, d'une zone de contact (19) plate, **caractérisé en ce que** le support de palier (2) est réalisé au moins en deux parties, comprenant une partie de support (22) formant la zone de charge (13) et un disque de guidage (23) disposé de façon à flotter dans ladite zone, formant la zone de palier (21) et guidé de façon à pouvoir être déplacé dans le plan axial sur la douille de guidage (4).

2. Dispositif d'actionnement (1) selon la revendication 1, **caractérisé en ce que** la zone de contact (19) est formée entre l'actionneur à levier (12), chargeant le support de palier (2) dans la zone de charge (13), de l'unité d'actionneur (11) et la zone de charge (13) située au niveau du support de palier (2) par le biais d'au moins une liaison réalisée par complémentarité de formes (20) entre le support de palier (2) et l'actionneur à levier (12).

3. Dispositif d'actionnement (1) selon la revendication 1 ou 2, **caractérisé en ce que** la zone de charge (13) comprend au niveau du support de palier (2) au moins une zone superficielle (13.1, 13.2) convexe et/ou concave pouvant être décrite par au moins un rayon de courbure interagissant avec une zone superficielle, concave et/ou convexe complémentaire pouvant être décrite par au moins un rayon de courbure, de la zone (18) chargeant le support de palier (2) au niveau de l'actionneur à levier (12), par formation de la zone de contact (19).

4. Dispositif d'actionnement (1) selon la revendication 2 ou 3, **caractérisé en ce que** la zone de charge (13) peut être décrite au niveau du support de palier (2) par au moins une calotte (26) et que la zone (18) chargeant le support de palier (2) est formée au niveau de l'actionneur à levier (12) par une coupole formée de façon complémentaire dans la zone d'extrémité de l'actionneur à levier (12).

5. Dispositif d'actionnement (1) selon l'une quelconque des revendications 1 à 4, **caractérisé en ce que** la partie de support (22) prend la forme d'un élément en forme de douille ou d'anneau enserrant le disque de guidage (23) par formation d'un jeu radial présent entre la périphérie extérieure (23A) du disque de guidage (23) et la périphérie intérieure (221) de la partie de support (22) dans la direction circonférentielle et comportant une surface axiale (25) pour l'interaction avec la surface de butée (24) axiale du disque de guidage (23).

6. Dispositif d'actionnement (1) selon l'une quelconque des revendications 1 à 5, **caractérisé en ce qu'**une fente annulaire radiale (30) est prévue entre le disque de guidage (23) et le palier de couplage/découplage (9).

7. Dispositif d'actionnement (1) selon l'une quelconque des revendications 1 à 6, **caractérisé en ce qu'**au moins les zones superficielles contribuant à la formation d'un appariement de frottement au niveau de la partie de support (22) et du disque de guidage (23) sont optimisées par rapport au choix des matériaux, notamment que la partie de support (22) et le disque de guidage (23) sont réalisés à partir de matériaux différents.
